(19) Europäisches Patentamt
European Patent Office
Office européen des brevets

(11) EP 0 567 408 B1

(12) FASCICULE DE BREVET EUROPEEN

(45) Date de publication et mention de la délivrance du brevet:
25.06.1997 Bulletin 1997/26

(51) Int Cl.⁶: **H05B 41/29**, H05B 41/38

(21) Numéro de dépôt: 93401064.6

(22) Date de dépôt: 23.04.1993

(54) **Dispositif d'alimentation de lampes à décharge et projecteur de véhicule utilisant un tel dispositif**

Einrichtung zum Betrieb von Entladungslampen und Fahrzeugscheinwerfer mit solch einer Einrichtung

Device for supplying discharge lamps and automotive headlamp containing such a device

(84) Etats contractants désignés:
DE ES GB IT

(30) Priorité: 24.04.1992 FR 9205079

(43) Date de publication de la demande:
27.10.1993 Bulletin 1993/43

(73) Titulaire: VALEO VISION
93012 Bobigny Cédex (FR)

(72) Inventeur: **Albou, Pierre**
F-75013 Paris (FR)

(74) Mandataire: **Lemaire, Marc**
**Valeo Management Services,**
**Sce Propriété Industrielle**
**2, rue André Boulle**
**B.P. 150**
**94004 Créteil (FR)**

(56) Documents cités:
EP-A- 0 477 587        DE-A- 4 033 664

## Description

La présente invention concerne un dispositif d'alimentation de lampes à décharge, notamment destiné à équiper un projecteur de véhicule. L'invention concerne aussi un système d'éclairage de véhicule équipé d'un tel dispositif.

Dans l'art antérieur, on a déjà proposé des dispositifs permettant de produire une première tension alternative de valeur élevée destinée à l'amorçage de la lampe à décharge. Puis, une fois la lampe allumée, le dispositif d'alimentation génère une tension alternative de faible valeur.

En particulier, on a déjà proposé un schéma d'alimentation constitué autour d'un montage dénommé pont en "H". Mais un tel dispositif exige quatre interrupteurs pour l'ensemble des branches du pont, la lampe à décharge se trouvant placée dans la branche centrale du pont. Or ces interrupteurs peuvent être traversés par de forts courants. De ce fait, ces composants sont chers car ils doivent présenter peu de pertes à l'état passant puisqu'à un instant donné deux interrupteurs fermés sont en série avec la charge.

Afin de réduire ces inconvénients, le document EP-A-0 477 587 propose un schéma d'alimentation autour d'un montage dénommé demi-pont qui n'utilise que deux interrupteurs. Le document DE-A-40 33 664 enseigne d'ailleurs un procédé de commande de tels interrupteurs.

Le circuit décrit dans le document EP-A-0 477 587 est alimenté par un dispositif générateur de tension alternative. Il comprend en outre un dispositif d'amorçage de la lampe à décharge alimenté par un autre dispositif générateur. L'utilisation d'un dispositif générateur distinct pour le circuit d'amorçage n'est pas acceptable dans un dispositif destiné à un projecteur de véhicule.

Pour remédier à ces inconvénients de l'art antérieur, la présente invention propose un dispositif d'alimentation de lampes à décharge, du type comprenant :

- un dispositif générateur de tension alternative comprenant un premier transformateur,
- une première partie d'un dispositif redresseur connecté à au moins un enroulement secondaire dudit premier transformateur , ladite première partie du dispositif redresseur présentant une première et une deuxième bornes de sortie et une troisième borne maintenue à un potentiel intermédiaire par rapport à celui desdites première et deuxième bornes de sortie,
- deux interrupteurs connectés en série auxdites première et deuxième bornes de sortie,
- un circuit d'amorçage comprenant un second transformateur dont le secondaire constitue le dipôle de sortie dudit circuit d'amorçage,

au moins une lampe à décharge et ledit dipôle de sortie du circuit d'amorçage étant connectés en série entre ladite troisième borne de la première partie du dispositif redresseur et la borne commune aux deux interrupteurs,

caractérisé en ce qu'une deuxième partie du dispositif redresseur est connecté à un autre enroulement secondaire du premier transformateur et présente deux bornes qui constituent les bornes d'entrée du circuit d'amorçage.

Un avantage de la présente invention est ainsi de créer un dispositif d'amorçage sans nécessiter un second générateur.

Dans un mode de réalisation, il est prévu de passer du mode d'amorçage au mode d'entretien par un changement de fréquence, ce qui représente une grande simplification par rapport aux dispositifs de l'art antérieur.

Dans un mode de réalisation, le dispositif générateur de tension alternative comprend un interrupteur quasi-résonnant en tension et sa sortie est constituée par au moins un secondaire de transformateur.

Dans un mode de réalisation, le dispositif redresseur comporte au moins un circuit série constitué d'une diode et d'un condensateur.

Quand le dispositif redresseur comporte deux circuits série précités, c'est un avantage de l'invention par rapport à un montage classique à demi-pont que de charger simultanément les deux condensateurs. Dans un demi- pont classique, ceux-ci sont chargés en série et doivent être dimensionnés en fonction de la fréquence de découpage du demi-pont (basse pour pouvoir utiliser des composants semi-conducteurs comme des IGBT qui sont lents et pour éviter d'engendrer des perturbations électromagnétiques avec les fils de liaison entre le dispositif d'alimentation et la lampe à décharge.

Dans l'invention, les condensateurs du dispositif redresseur filtrent les sorties du convertisseur quasi-résonnant dont la fréquence de découpage peut atteindre 1 Mhz ($10^6$ Hz). La capacité de ces condensateurs peut être faible ( de l'ordre de 1000 fois plus faible que celle des condensateurs d'un demi-pont classique).

L'invention concerne aussi un projecteur de véhicule équipé d'un tel dispositif d'alimentation.

D'autres caractéristiques et avantages de la présente invention seront mieux compris à l'aide de la description et des figures annexées qui sont :

La figure 1 : un schéma d'un premier mode de réalisation de la présente invention ;

Les figures 2 à 6 : des schémas équivalents du circuit de la figure 1 expliquant le fonctionnement à lampe éteinte du mode de réalisation de la présente invention ;

Les figures 7a à 7d : des graphes des courants et tensions en divers points du dispositif représenté aux figures 1 à 6 ;

Les figures 8 à 13 : des schémas équivalents du circuit de la figure 1 expliquant le fonctionnement à lampe allumée du mode de réalisation de la présente invention avec référence aux figures 7a à 7d ;

La figure 14 : un schéma équivalent d'amorçage du dispositif selon l'invention ;

Les figures 15a et 15b : des graphes des courants et tensions en divers points du dispositif représenté notamment par la figure 14.

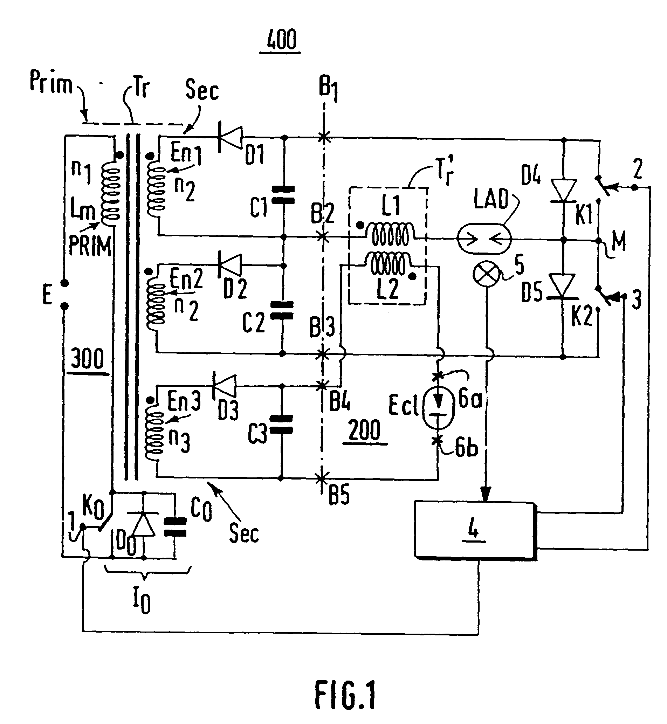

A la figure 1, on a représenté un schéma d'un premier mode de réalisation de la présente invention.

A la figure 1, le dispositif d'alimentation de l'invention comporte un moyen permettant de produire une haute tension alternative. Dans un mode préféré de réalisation, ce moyen est constitué par un onduleur quasi-résonnant en tension.

A cet effet, le dispositif d'alimentation selon l'invention comporte un transformateur Tr dont le primaire PRIM comporte un enroulement de n1 spires et présente une inductance de fuite de valeur Lm. Le secondaire SEC du transformateur Tr comporte une pluralité d'enroulements En1, En2, En3, ... comportant n2 et n3 spires. Les sens des enroulements sont identiques et figurés à la figure 1 par des points.

Le pied de l'enroulement primaire PRIM est connecté à un interrupteur I0 du type quasi-résonnant, qui comporte un élément de commutation K0 dont l'électrode de commande 1 est connectée à la sortie d'un dispositif de commande 4. L'interrrupteur I0 forme un interrupteur quasi-résonnant avec le transformateur. Le dispositif de commande 4 gère selon un programme enregistré les phases de commutation des divers interrupteurs du dispositif de l'invention, en fonction de paramètres mesurés par un moyen connu 5 en entrée du dispositif de commande 4. Dans un autre mode de réalisation adapté à la présente description, et dont l'exécution en suivant la divugation de la présente demande est à la portée de l'homme de métier, comporte un circuit de commande de type analogique.

Dans un mode de réalisation préféré, les paramètres mesurés par le moyen 5 sont le courant et la tension instantanés qui traversent la lampe LAD.

L'interrupteur quasi-résonnant est constitué dans un mode de réalisation par un circuit parallèle composé d'un interrupteur commandé K0, par une diode D0 et un condensateur C0 et est prévu pour fonctionner sur des hautes fréquences de commutation de l'ordre de 100 KHz et plus.

A cet effet, l'électrode de commande 1 est connectée à une sortie convenable du dispositif de commande 4.

Le dispositif d'alimentation est construit autour d'un demi-pont disposé au secondaire SEC du transformateur impulsionnel Tr et constitué par deux interrupteurs commandés K1 et K2. Dans le cas où le composant servant à réaliser ne comporte pas de diode anti-parallèle dans son chemin de commutation (cas d'un composant IGBT), chaque interrupteur K1, K2 est doublé par une diode D4 ou D5. En particulier, dans le cas où les interrupteurs sont constitués par des transistors à effet de champ de puissance, la diode est constituée par la diode induite entre source et drain.

Le point commun M entre les deux interrupteurs commandés K1 et K2 est connecté à une première borne d'au moins une lampe à décharge LAD, dont une seconde borne est connectée à un dispositif redresseur 400 d'au moins une alternance de la haute tension alternative produite au secondaire S du transformateur Tr. Le dispositif 400 présente une paire de bornes de sortie B1, B3. Une première borne de sortie B1 du dispositif 400 est connectée à une première extrémité du circuit série constitué par les deux interrupteurs K1 et K2, tandis qu'une seconde borne de sortie B3 du dispositif 400 est connectée à une seconde extrémité du circuit série constitué par les deux interrupteurs K1 et K2.

Enfin, le dispositif redresseur 400 comporte une borne de sortie B2 connectée à l'autre extrémité de la lampe à décharge LAD.

Dans un mode de réalisation préféré, le dispositif d'alimentation comporte aussi un circuit d'amorçage 200 constitué autour d'un éclateur ECL.

Un éclateur est constitué par un tube à décharge dont la tension d'amorçage est plus basse et plus facile à atteindre que celle de la lampe à décharge LAD destinée, elle, à produire un flux lumineux présentant aussi rapidement que possible un rendement lumineux convenable.

L'éclateur Ecl comporte deux bornes de connexion. La première borne 6a est connectée à une borne d'un enroulement L2 d'un second transformateur Tr' et la seconde borne 6b est connectée à une borne B5 du dispositif redresseur 400. L'autre borne de l'enroulement primaire L2 est directement connectée à une borne de sortie B4 du dispositif redresseur 400.

Le dispositif redresseur est constitué par une série de cellules de redressement mono-alternance, chaque cellule comportant une diode et un condensateur ; comme les cellules D1, C1, D2, C2 et D3, C3.

Dans un mode préféré de réalisation, le transformateur Tr présente une caractéristique inductive de fuite L au primaire qui entre en compte dans le fonctionnement de l'interrupteur quasi-résonnant.

Dans les cas où cette caractéristique inductive de fuite L est insuffisante, on peut ajouter une bobine de valeur prédéterminée convenable L dans le circuit primaire, en série avec l'enroulement primaire PRIM.

Le circuit d'alimentation de l'invention est donc composé avec un interrupteur quasi-résonnant seulement disposé au primaire du transformateur et avec deux interrupteurs simples au secondaire SEC.

L'un des avantages de l'invention réside dans la possibilité de créer un dispositif ou moyen d'amorçage sans nécessiter un onduleur secondaire. Grâce au convertisseur quasi-résonnant, un simple changement de fréquence permet de passer du mode d'amorçage (fréquence basse) qui permet d'atteindre entre les bornes B4 et B5 une tension supérieure au seuil d'amorçage de l'éclateur au mode d'entretien (fréquence plus élevée).

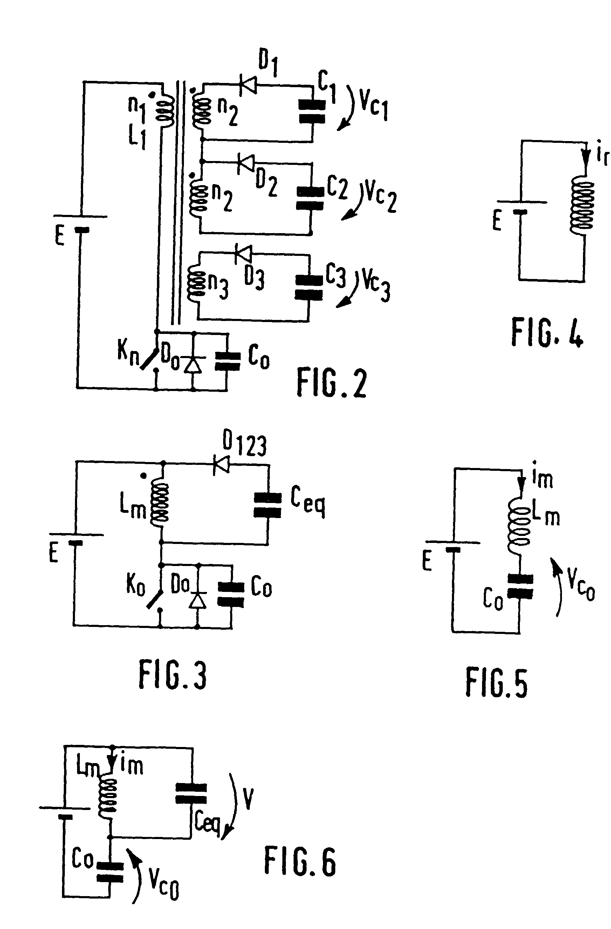

A la Figure 2, on a représenté un schéma équivalent du circuit d'alimentation quand la lampe LAD est éteinte. L'éclateur Ecl de la Figure 1 est supposé bloqué. On remarque que le circuit d'alimentation comporte au primaire de Tr l'enroulement PRIM, l'interrupteur quasi-résonnant et la source de tension continue E, par exemple constituée par la batterie embarquée à bord du véhicule.

Au secondaire de Tr, on trouve le dispositif 400 de redressement constitué des trois cellules C1, D1, C2, D2 et C3, D3. Aux bornes des condensateurs C1 à C3 on mesure les tensions instantanées.

On sait que l'on peut ramener en fonction des caractéristiques du transformateur Tr les grandeurs électriques au primaire PRIM, selon le schéma de la Figure 3. On a en particulier constitué une diode équivalente D123 aux trois diodes des cellules précitées D1, D2 et D3. De plus, la capacité équivalente Ceq est définie par la relation :

$$Ceq = (n2/n1)^2 \cdot C1 + (n2/n1)^2 \cdot C2 + (n3/n1)^2 \cdot C3$$

aux bornes desquelles on trouve des tensions égales : $(n1/n2) \cdot VC1 = (n1/n2) \cdot VC2 = (n1/n3) \cdot VC3$.

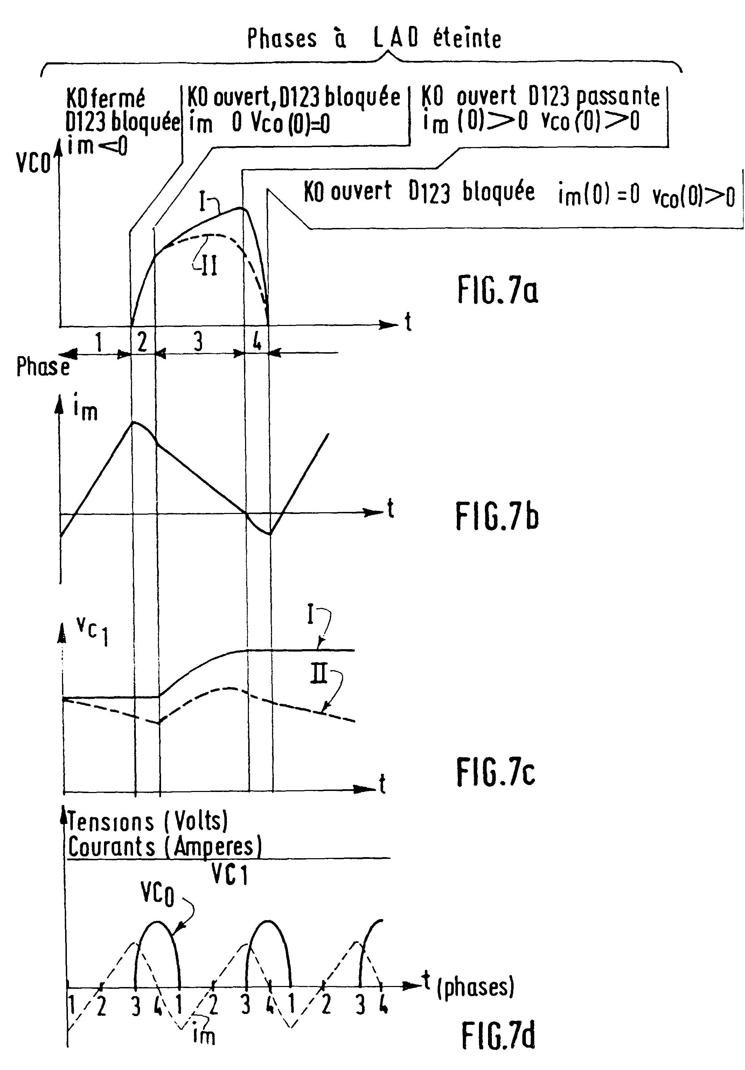

Les figures 2 à 13 seront commentées à l'aide des graphes des figures 7a à 7c principalement, dans lesquelles le fonctionnement à lampe LAD éteinte est décrit par les courbes I en traits pleins, et à lampe LAD allumé est décrit par les courbes II en tirets.

A la Figure 4, on a représenté un schéma lors de la première phase d'alimentation en mode d'amorçage en partant de l'état de la Figure 2. L'interrupteur K0 est fermé, la diode D123 est bloquée, le courant traversant l'enroulement primaire Lm, soit le courant im, est négatif initialement (voir Figure 7a). Dans ce cas, on constate que le courant i est un courant linéairement croissant (voir phase 1, Figure 7b). Le circuit de pilotage 4 détecte, à l'aide d'un moyen de mesure de courant spécial, que le courant i est suffisamment grand et commute l'interrupteur K0 par son électrode de commande 1 (Figure 1). Dans un autre mode de réalisation, le dispositif de commande 4 ne mesure aucun paramètre particulier autre que la durée de commutation de phase 1 prédéterminée pour un dispositif d'alimentation donné, et commute l'interrupteur au bout de cette durée prédéterminée. Pendant cette phase 1, la tension aux bornes du condensateur C0 est nulle (voir phase 1, figure 7a), et le circuit magnétique de Tr stocke l'énergie magnétique.

Au début de la phase 2, l'interrupteur K0 est ouvert, la diode D123 est bloquée et le courant magnétisant im est positif (voir phase 2, Figure 7b). Le circuit équivalent est représenté à la figure 5 où une tension VC0 apparaît aux bornes du condensateur C0. De ce fait, le condensateur C0 se charge et la tension à ses bornes : VC0 (voir phase 2, Figure 7a) augmente, tandis que du fait que le circuit magnétique restitue une partie de son énergie, le courant im (voir phase 2, Figure 7b) diminue.

La phase 2 se termine de façon naturelle quand la tension aux bornes de l'enroulement Lm devient suffisamment faible pour que la diode D123 redevienne passante.

Dans un mode de réalisation non représenté aux figures, la diode D123 étant réalisée par des interrupteurs commandés à la place des diodes D1, D2 ou D3, peut devenir passante sous le contrôle du circuit de pilotage ou de contrôle 4, en fonction de mesures réalisées par un moyen particulier dont la réalisation est à la portée de l'homme de métier.

Lors de la phase 3, l'interrupteur K0 est ouvert, la diode D123 est passante, le courant magnétisant im est positif, la tension VC0 aux bornes du condensateur C0 est positive (voir phase 3, Figure 7a). Le schéma équivalent est donné à la Figure 6, dans laquelle, la diode 123 étant passante, le condensateur équivalent Ceq est connecté aux bornes de la bobine Lm.

Du fait de la dérivation par la diode D123, la tension aux bornes de C0, soit VC0, monte moins vite que lors de la phase 2 (voir phase 3, Figure 7a). La tension VC1 aux bornes du condensateur Ceq qui était constante pendant les phases 1 et 2, puisque la diode D123 isolait le condensateur du reste du circuit, augmente puisque la charge du condensateur augmente (voir phase 3, Figure 7c). L'annulation des courants dans la diode D123 termine la phase 3 (voir Figure 7b) et à cet instant, le courant primaire s'annule également.

Cette fin peut être contrôlée dans le mode de réalisation non représenté précité, par exemple en fonction des caractéristiques de flux lumineux désiré produit par la lampe à décharge LAD en fonction des mesures prélevées sur le moyen de mesure 5 connecté en entrée du circuit de contrôle 4.

Au début de la phase 4, l'interrupteur K0 est ouvert, la diode D123 est bloquée, le courant magnétisant im est nul et la tension aux bornes de C0 est positive (voir phase 4, Figure 7a).

On revient alors au schéma équivalent de la figure 5. En particulier, la tension VC1 aux bornes du condensateur équivalent Ceq reste constante et égale à une valeur plus élevée que celle lors des phases 1 et 2. On conçoit donc que la tension disponible sur les condensateurs d'origine C1, C2 et C3 du condensateur équivalent C123 augmente.

Le courant im traversant l'enroulement Lm devient alors négatif, ce qui a pour effet de décharger le condensateur C0 dont la tension VC0 diminue (voir phase 4, Figure 7a). La phase 4 se termine naturellement quand la diode D0 de l'interrupteur quasi-résonnant redevient conductrice. De ce fait, le courant im devra augmenter, et il faudra refermer rapidement l'interrupteur K0 avant que im ne redevienne positif.

On décrit ainsi une succession de cycles de fonctionnement commandés principalement à lampe LAD éteinte par la commutation de l'interrupteur K0 sous le contrôle du circuit de pilotage 4 en fonction des mesures, notamment de V réalisées par un moyen de mesure, qui règle en réponse la fréquence de découpage.

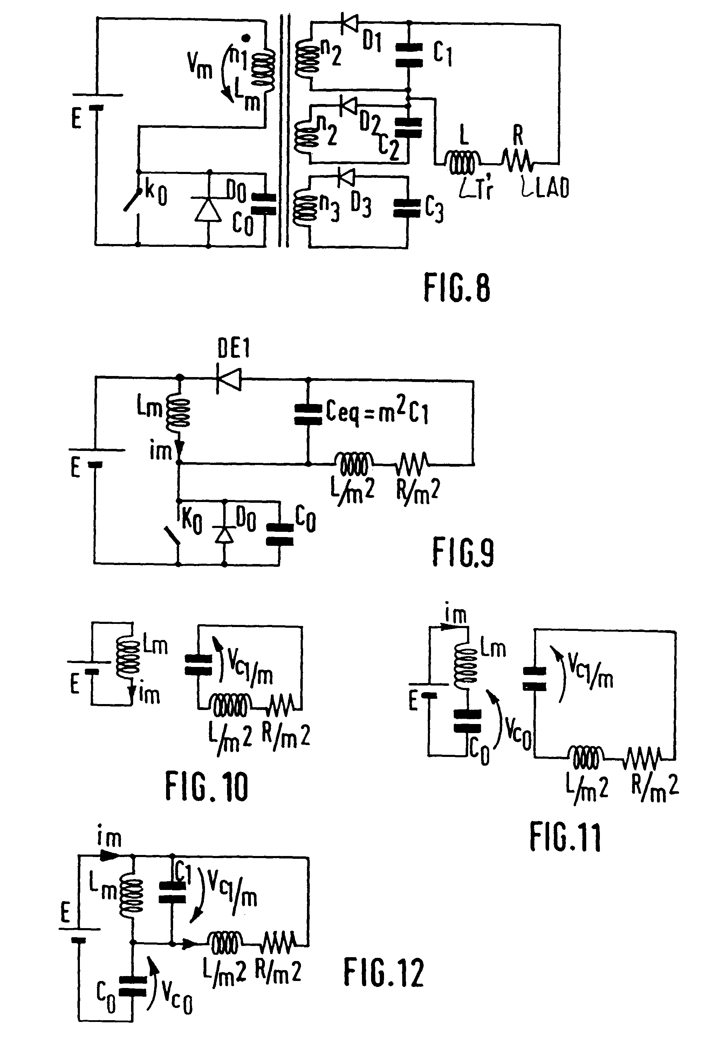

Aux figures 8 à 13, on a représenté le même fonctionnement à lampe LAD allumée, qui constitue alors, en particulier si le régime thermique de la lampe LAD est bien établi, une charge résistive pour le dispositif d'alimentation.

Aux Figures 8 à 13, les mêmes éléments que ceux des figures 2 à 6 sont désignés par les mêmes numéros de référence et leurs adaptations ne sont pas décrites.

On suppose qu'initialement, l'interrupteur K1 du demi-pont est fermé et que l'interrupteur K2 est ouvert. Comme une telle phase dure pendant plusieurs centaines de périodes de commutation de l'interrupteur K0, on peut considérer qu'il s'agit d'un état permanent. La commutation à longue durée de K1 et de K2 sert seulement à changer le signe de la tension aux bornes de la charge. Le schéma de la figure 2 est transformé alors selon le schéma de la figure 8, dans lequel l'enroulement équivalent L du transformateur Tr' du moyen d'amorçage 200 de la Figure 1 est présent, ainsi que la résistance R représentative de la lampe à décharge LAD.

Dans le fonctionnement à lampe LAD allumée, l'interrupteur K0 travaille comme dans le cas du fonctionnement lampe LAD éteint. De même la diode équivalente DE1 représentée à la figure 9 suit les mêmes états passant - bloqué que la diode équivalente D123.

Au début de la phase 1, représentée à la figure 10 en schéma équivalent, l'interrupteur K0 est fermé, la diode DE1 est bloquée, le courant im dans l'enroulement Lm est négatif et la tension VC1 aux bornes du condensateur C1 est positive. De ce fait, le condensateur C1 se décharge dans le circuit série constitué par la self équivalente $L/m^2$ du transformateur Tr' d'amorçage et dans la résistance équivalente $R/m^2$ de la lampe LAD. Dans ces valeurs m est le rapport de transformation du transformateur Tr et est établi égal à :

$$m = n2/n1$$

De ce fait, la tension aux bornes de C1 diminue (phase 1, tiret II de la figure 7c). Les autres paramètres sont inchangés.

Le circuit de contrôle 4 mesure le courant dans l'enroulement Lm et ouvre l'interrupteur K0 quand la valeur du courant im qui le traverse est devenue suffisamment positive (voir phase 1, Figure 7b). Dans un autre mode de réalisation, le circuit de contrôle 4 impose une durée de conduction et une durée d'ouverture de l'interrupteur K0 et le régime s'établit de lui-même.

Au début de la phase 2, l'interrupteur K0 est ouvert, la diode DE1 est bloquée, le courant im dans la bobine Lm est positif et la tension VC0 aux bornes du condensateur C0 est encore nulle.

Le condensateur C1 poursuit sa décharge (voir sa tension VC1, phase 2, figure 7c, courbe II en tirets). Le schéma équivalent est représenté à la figure 11. A la fin de la phase 2, déterminée comme dans le fonctionnement à lampe LAD éteint, la diode DE1 redevient passante. La phase 2 est un simple prolongement de la phase 1 avec l'introduction du condensateur C0 dans la boucle de gauche du schéma de la Figure 11.

Au début de la phase 3, l'interrupteur K0 reste ouvert, et la diode DE1 est passante. Le schéma équivalent est représenté à la figure 12. La tension E est égale à la somme des tensions aux bornes de l'enroulement Lm et du condensateur C0. La fréquence de découpage est suffisamment élevée au niveau de l'interrupteur K0 pour que l'inductance L/m2 soit une source de courant à l'échelle d'une période de commutation de l'interrupteur K0. De ce fait, la tension VC0 décrit une portion de sinusoïde de période faible devant la durée de la phase 3. Celle-ci se termine quand le courant dans D1 s'annule c'est-à-dire lorsque les courants dans l'enroulement Lm et dans le condensateur C0 sont égaux.

Au début de la phase 4, l'interrupteur K0 est ouvert, la diode D1 est bloquée et le courant im dans l'enroulement Lm est sensiblement nul. On se retrouve dans le cas du schéma équivalent de la Figure 11.

Il en vient que la tension VC1 aux bornes du condensateur C1 diminue comme dans les phases 1 et 2 (voir phase 4, courbe II en tirets de la figure 7C), et que la tension VC0 aux bornes du condensateur C0 décrit une portion de sinusoïde décroissante jusqu'à s'annuler (phase 4, courbe II en tirets de la figure 7a).

A la figure 7d, on a représenté en tirets la courbe représentative du courant im dans l'enroulement Lm et en traits pleins la courbe représentative de la tension VC0 aux bornes du condensateur C0, quand la tension VC1 aux bornes du condensateur C1 a atteint une valeur maximum à laquelle elle reste bloquée. On remarque que l'énergie entrante mais non consommée dans le convertisseur est restaurée sur la source E.

Ce mode de fonctionnement peut apparaître dans certains cas de pannes ou de déplacement des points de réglage (dû par exemple au vieillissement des composants, etc.). L'invention présente l'avantage de proposer alors un mode de fonctionnement non dissipatif et non destructif puisque les tensions restent alors inférieures au seuil de déclenchement de l'éclateur.

Les cycles de quatre phases 1 à 4 se répètent pendant toute la phase d'entretien.

A la Figure 14, on a représenté un circuit équivalent au circuit de la Figure 1, quand la lampe est éteinte et que le dispositif d'amorçage 200 entre en action, en supposant l'interrupteur K1 fermé et l'interrupteur K0 ouvert.

Lorsque l'éclateur Ecl s'amorce, la lampe LAD étant éteinte, la lampe est représentée par un circuit ouvert, tandis que l'éclateur est sensiblement équivalent à un court-circuit. On suppose initialement l'interrupteur K1 fermé et l'interrupteur K2 ouvert.

L'éclateur s'amorce pendant la phase 3 lors du fonctionnement à vide après quelques milliers de périodes pendant lesquelles il reste éteint.

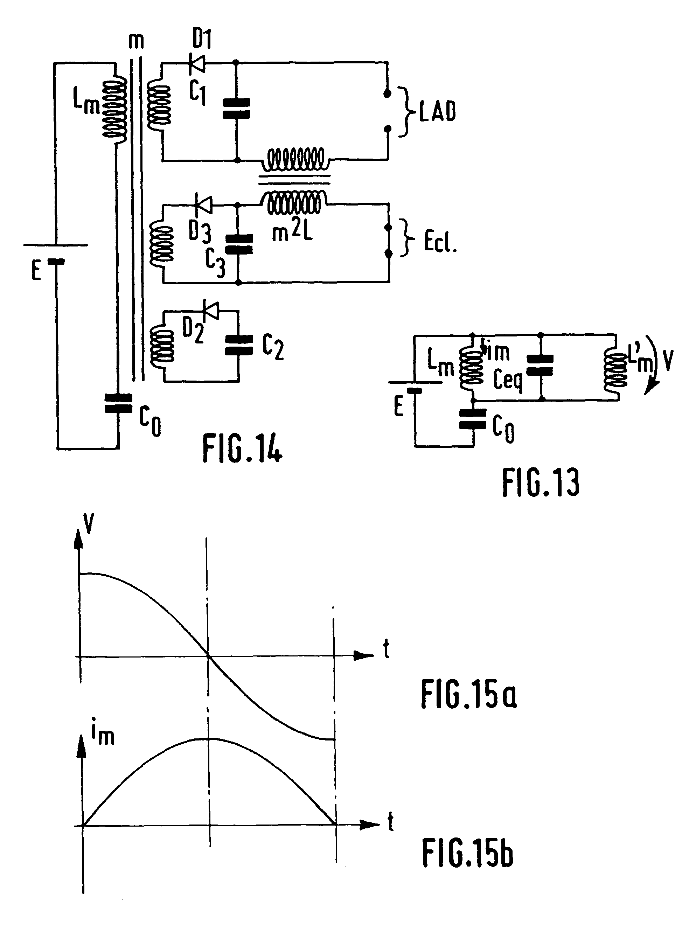

Au cours de cette phase, le circuit équivalent est analogue à celui de la Figure 13, le condensateur équivalent étant donné par :

$$Ceq = m^2 . C3$$

La tension V aux bornes de l'enroulement Lm' représentatif du transformateur d'amorçage Tr' décroit donc. Comme cette tension est proportionnelle à la dérivée du courant qui le traverse, on établit les diagrammes des figures 15a et 15b.

Ces courant et tension apparaissent lors de l'amorçage de l'éclateur qui survient presque immédiatement après le début de la phase 3 du fonctionnement à vide. Au cours de cette phase, les diodes D1 et D2 sont bloquées et la diode D3 est conductrice. On remarque que si m' est le rapport de transformation du transformateur d'amorçage Tr', alors la tension d'amorçage V (voir figure 15a) est appliquée sous un rapport élévateur à la lampe à décharge LAD sous une valeur m'V. Le choix de m' et de V permet ainsi d'allumer la lampe à décharge LAD dès la première impulsion de tension V dans un temps très bref.

D'autres schémas sont possibles pour le dispositif de l'invention. En particulier, il est possible d'utiliser d'autres schémas de dispositifs redresseurs que les cellules D, C. De même, en fonction des caractéristiques des deux transformateurs d'autres composants peuvent être introduits dans le circuit décrit.

En particulier, les diodes D1 et D2 peuvent être montées dans des sens opposés l'une à l'autre, si par exemple la diode D1 est montée en tête de l'enroulement En1, que le pied de l'enroulement En1 est connecté en série avec la tête de l'enroulement En2 et que la diode D2 est connectée au pied de l'enroulement En2.

Les commutations des trois interrupteurs qui sont à la base de l'invention sont gérées par le dispositif de contrôle 4 à l'aide des mesures du moyen 5.

Les deux interrupteurs K1, K2 du demi-pont fonctionnent indépendamment des commutations de l'interrupteur quasi-résonnant I0 et en opposition de phase l'un par rapport à l'autre. Leurs électrodes de commande sont activées par le dispositif de contrôle 4.

Pour que le demi-pont puisse fonctionner, il faut que les deux interrupteurs K1 et K2 restent ouverts un court instant simultanément. Cette ouverture simultanée est à l'origine d'un transitoire très bref car la continuité du courant dans le secondaire du transformateur d'amorçage implique la mise en conduction rapide d'une des diodes placées en anti-parallèle avec K1 et K2.

De ce fait, les schémas équivalents du convertisseur décrits précédemment sont identiques, que K1 ou K2 soit conducteur.

La fréquence de commutation de ces interrupteurs est déterminée de façon à être beaucoup plus basse que celle de K0. De ce fait, le fonctionnement du dispositif d'alimentation est constitué par une succession de régimes établis avec un changement périodique du sens de la tension délivrée, changement produit par les commutations du demi-pont.

L'amorçage qui a été décrit dans la présente demande peut être réalisé avec d'autres dispositifs générateurs d'une haute tension qu'un éclateur. En particulier, on peut utiliser un composant semi-conducteur.

De même, les dispositifs redresseurs peuvent être modifiés et prendre toute autre structure compatible avec le fonctionnement décrit.

## Revendications

1. Dispositif d'alimentation de lampes à décharge, du type comprenant :

   - un dispositif générateur de tension alternative (300) comprenant un premier transformateur (Tr),
   - une première partie d'un dispositif redresseur (400) connecté à au moins un enroulement secondaire (En1, En2) dudit premier transformateur (Tr), ladite première partie du dispositif redresseur présentant une première et une deuxième bornes de sortie (B1, B3) et une troisième borne (B2) maintenue à un potentiel intermédiaire par rapport à celui desdites première et deuxième bornes de sortie (B1, B3),
   - deux interrupteurs (K1, K2) connectés en série auxdites première et deuxième bornes de sortie (B1, B3),
   - un circuit d'amorçage (200) comprenant un second transformateur (Tr') dont le secondaire (L1) constitue le dipôle de sortie dudit circuit d'amorçage (200),

   au moins une lampe à décharge (LAD) et ledit dipôle de sortie (L1) du circuit d'amorçage (200) étant connectés en série entre ladite troisième borne (B2) de la première partie du dispositif redresseur (400) et la borne commune (M) aux deux interrupteurs (K1, K2), caractérisé en ce qu'une deuxième partie du dispositif redresseur (400) est connecté à un autre enroulement secondaire (En3) du premier transformateur (Tr) et présente deux bornes (B4, B5) qui constituent les bornes d'entrée du circuit d'amorçage (200).

2. Dispositif selon la revendication 1, caractérisé en ce que le circuit d'amorçage (200) comprend un éclateur (Ecl) connecté en série avec le primaire (L2) dudit second transformateur (Tr') auxdites bornes d'entrée (B4, B5) du circuit d'amorçage (200).

3. Dispositif selon la revendication 1 ou 2, caractérisé en ce que le dispositif redresseur (400) est constitué par au moins une cellule comportant un condensateur (C1, C2, C3), chargé par une diode (D1, D2, D3) ou par un composant à conduction contrôlée comme un thyristor.

4. Dispositif selon l'une des revendications 1 à 3, caractérisé en ce que le dispositif générateur de tension alternative (300) comprend une source de tension continue (E) connectée au primaire (PRIM) dudit premier transformateur (Tr) par l'intermédiaire d'au moins un interrupteur quasi-résonnant en tension (I0), dont une électrode de commande est connectée à un circuit de pilotage (4) et en ce que la sortie dudit dispositif générateur de tension alternative (300) est constituée par au moins un enroulement secondaire (En1, En2, En3).

5. Dispositif selon la revendication 4, caractérisé en ce que l'interrupteur quasi-résonnant en tension (I0) fonctionnne à une première fréquence dans le mode d'amorçage de la lampe à décharge (LAD), cette première fréquence étant suffisante pour produire une tension aux bornes (B4, B5) de ladite deuxième partie du dispositif redresseur (400) susceptible d'activer le circuit d'amorçage (200), et à une seconde fréquence, plus élevée que ladite première fréquence, dans le mode d'entretien de la lampe à décharge (LAD).

6. Dispositif selon la revendication 4 ou 5, caractérisé en ce que l'interrupteur quasi-résonnant en tension (I0) est composé par un circuit parallèle comportant un interrupteur commandé (K0) doté d'une électrode de commande, une diode (D0) et un condensateur (C0), et monté en série avec une inductance, comme l'inductance de fuite au primaire (PRIM) dudit premier transformateur (Tr).

7. Dispositif selon la revendication 6, caractérisé en ce que ledit circuit de pilotage (4) comprend des moyens de mesure (5) des paramètres de fonctionnement de la lampe à décharge (LAD), et en ce qu'il ferme ledit interrupteur commandé (K0) au début d'un cycle d'entretien quand la tension aux bornes de l'interrupteur quasi-résonnant en tension (I0) est nulle, pour l'ouvrir quand le courant dans l'enroulement primaire (PRIM) dudit premier transformateur (Tr) a atteint une valeur positive déterminée.

8. Dispositif selon la revendication 6, caractérisé en ce que ledit circuit de pilotage (4) produit une commutation d'ouverture dudit interrupteur commandé (KO) au bout d'une première durée prédéterminée en fonction des paramètres prédéterminés du dispositif d'alimentation et une commutation de fermeture dudit interrupteur commandé (KO) au bout d'une seconde durée prédéterminée en fonction des paramètres prédéterminés du dispositif d'alimentation.

9. Projecteur de véhicule équipé d'un dispositif d'alimentation de lampes à décharge selon l'une des revendications précédentes.

## Patentansprüche

1. Einrichtung zum Betrieb von Entladungslampen mit:

 - einer Wechselspannungsgeneratoreinrichtung (300), die einen ersten Transformator (Tr) enthält,
 - einem ersten Teil einer Gleichrichtereinrichtung (400), die an mindestens eine Sekundärwicklung (Enl, En2) des besagten ersten Transformators (Tr) angeschlossen ist, wobei der besagte erste Teil der Gleichrichtereinrichtung eine erste und eine zweite Ausgangsklemme (Bl, B3) und eine dritte Klemme (B2) aufweist, die auf einem Zwischenpotential, bezogen auf das Potential der besagten ersten und zweiten Ausgangsklemme (Bl, B3, gehalten wird,
 - zwei Schaltern (K1, K2), die mit der besagten ersten und zweiten Ausgangsklemme (B1, B3) in Reihe geschaltet sind,
 - einer Zündschaltung (200), die einen zweiten Transformator (Tr') enthält, dessen Sekundärwicklung (L1) den Ausgangsdipol der besagten Zündschaltung (200) bildet,

 wobei mindestens eine Entladungslampe (LAD) und der besagte Ausgangsdipol (L1) der Zündschaltung (200) zwischen der besagten dritten Klemme (B2) des ersten Teils der Gleichrichtereinrichtung (400) und der gemeinsamen Klemme (M) der beiden Schalter (K1, K2) in Reihe geschaltet sind, **dadurch gekennzeichnet,** daß ein zweiter Teil der Gleichrichtereinrichtung (400) an eine andere Sekundärwicklung (En3) des ersten Transformators (Tr) angeschlossen ist und zwei Klemmen (B4, B5) aufweist, welche die Eingangsklemmen der Zündschaltung (200) bilden.

2. Einrichtung nach Anspruch 1 , **dadurch gekennzeichnet**, daß die Zündschaltung (200) einen Entlader (Ecl) enthält, der in Reihenschaltung mit der primärseite (L2) des besagten zweiten Transformators (Tr') an die besagten Eingangsklemmen (B4, B5) der Zündschaltung (200) angeschlossen ist.

3. Einrichtung nach Anspruch 1 oder 2 , **dadurch gekennzeichnet,** daß die Gleichrichtereinrichtung (400) aus mindestens einer Zelle mit einem Kondensator (Cl, C2, C3) besteht, der durch eine Diode (D1, D2, D3) oder durch ein Bauelement mit gesteuerter Leitung wie einen Thyristor geladen wird.

**4.** Einrichtung nach einem der Ansprüche 1 bis 3, **dadurch gekennzeichnet,** daß die Wechselspannungsgeneratoreinrichtung (300) eine Gleichspannungsquelle (E) enthält, die an die Primärseite (PRIM) des besagten ersten Transformators (Tr) über mindestens einen quasi-spannungsresonanten Schalter (I0) angeschlossen ist, von dem eine Steuerelektrode an eine Steuerschaltung (4) angeschlossen ist, und daß der Ausgang der besagten Wechselspannungsgeneratoreinrichtung (300) aus mindestens einer Sekundärwicklung (Enl, En2, En3) besteht.

**5.** Einrichtung nach Anspruch 4 , **dadurch gekennzeichnet,** daß der quasi-spannungsresonante Schalter (I0) bei einer ersten Frequenz im Zündmodus der Entladungslampe (LAD) arbeitet, wobei diese erste Frequenz ausreichend ist, um eine Spannung an den Klemmen (B4, B5) des besagten zweiten Teils der Gleichrichtereinrichtung (400) zu erzeugen, die die Zündschaltung (200) aktivieren kann, und bei einer zweiten Frequenz, die höher als die besagte erste Frequenz ist, im Wartungsmodus der Entladungslampe (LAD).

**6.** Einrichtung nach Anspruch 4 oder 5 , **dadurch gekennzeichnet,** daß der quasi-spannungsresonante Schalter (I0) durch eine Parallelschaltung gebildet wird, die einen angesteuerten Schalter (K0) mit einer Steuerelektrode, eine Diode (D0) und einen Kondensator (C0) umfaßt und mit einer Induktivität in Reihe geschaltet ist, etwa mit der Streuinduktivität an der Primärseite (PRIM) des besagten ersten Transformators (Tr).

**7.** Einrichtung nach Anspruch 6 , **dadurch gekennzeichnet,** daß die besagte Steuerschaltung (4) Meßmittel (5) zur Messung der Betriebsparameter der Entladungslampe (LAD) enthält und daß er den besagten angesteuerten Schalter (K0) zu Beginn eines Wartungszyklus schließt, wenn die Spannung an den Klemmen des quasi-spannungsresonanten Schalters (I0) gleich null ist, um ihn zu öffnen, wenn der Strom in der Primärwicklung (PRIM) des besagten ersten Transformators (Tr) einen bestimmten positiven Wert erreicht hat.

**8.** Einrichtung nach Anspruch 6 , **dadurch gekennzeichnet,** daß die besagte Steuerschaltung (4) einen Schaltvorgang zum Öffnen des besagten angesteuerten Schalters (K0) am Ende einer ersten Dauer, die in Abhängigkeit von den vorbestimmten Parametern der Betriebseinrichtung vorbestimmt ist, und einen Schaltvorgang zum Schließen des besagten angesteuerten Schalters (K0) am Ende einer zweiten Dauer bewirkt, die in Abhängigkeit von den vorbestimmten Parametern der Betriebseinrichtung vorbestimmt ist.

**9.** Fahrzeugscheinwerfer, der mit einer Einrichtung zum Betrieb von Entladungslampen nach einem der vorangehenen Ansprüche ausgerüstet ist.

## Claims

**1.** Power supply apparatus for discharge lamps, of the type comprising:

- an alternating voltage generating circuit (300) including a first transformer (Tr),

- a first part of a rectifying device (400) connected to at least one secondary winding (En1, En2) of the said first transformer (Tr), the said first part of the rectifying device having a first and a second output terminal (B1, B3) and a third terminal (B2) maintained at an intermediate potential with respect to that of the said first and second output terminals (B1, B3),

- two interruptors (K1, K2) connected in series to the said first and second output terminals (B1, B3)

- a starting circuit (200) including a second transformer (Tr'), the secondary (L1) of which constitutes the output dipole of the said starting circuit (200),

at least one discharge lamp (LAD) and the said output dipole (L1) of the starting circuit (200) being connected in series between the said third terminal (B2) of the first part of the rectifying device (400), and the common terminal (M) to the two interruptors (K1, K2), characterised in that a second part of the rectifying device (400) is connected to another secondary winding (En3) of the first transformer (Tr) and has two terminals (B4, B5) which constitute the input terminals of the starting circuit (200).

**2.** Apparatus according to Claim 1, characterised in that the starting circuit (200) includes a spark gap (Ecl) connected, in series with the primary (L2) of the said second transformer (Tr'), to the said input terminals (B4, B5) of the starting circuit (200).

**3.** Apparatus according to Claim 1 or Claim 2, characterised in that the rectifying device (400) consists of at least one cell, comprising a capacitor (C1, C2, C3), charged by a diode (D1, D2, D3) or by a controlled conduction component such as a thyristor.

**4.** Apparatus according to one of Claims 1 to 3, characterised in that the alternating voltage generating device (300) comprises a source of unidirectional voltage (E) connected to the primary (PRIM) of the said first transformer (Tr) through at least one interruptor (I0) which is quasi-resonant in voltage and has a control electrode which is connected to a control circuit (4), and in that the output of the said alternating voltage generating device (300) comprises at least one secondary winding (En1, En2, En3).

5.  Apparatus according to Claim 4, characterised in that the interruptor (I0) which is quasi-resonant in voltage operates at a first frequency in the starting mode of the discharge lamp (LAD), the said first frequency being sufficient to produce a voltage at the terminals (B4, B5) of the said second part of the rectifying device (400) which is adapted to activate the starting circuit (200), and at a second frequency, higher than the said first frequency, in the working mode of the discharge lamp (LAD).

6.  Apparatus according to Claim 4 or Claim 5, characterised in that the interruptor (I0) which is quasi-resonant in voltage consists of a parallel circuit including a controlled interruptor (K0) having a controlled electrode, a diode (D0) and a capacitor (C0), and is connected in series with an inductance, such as the leakage inductance at the primary (PRIM) of the said first transformer (Tr).

7.  Apparatus according to Claim 6, characterised in that the said control circuit (4) includes means (5) for measuring working parameters of the discharge lamp (LAD), and in that it closes the said control interruptor (K0) at the beginning of a working cycle when the voltage at the terminals of the interruptor (I0) which is quasi-resonant in voltage is zero, so as to open when the current in the primary winding (PRIM) of the said first transformer (Tr) has reached a predetermined positive value.

8.  Apparatus according to Claim 6, characterised in that the said control circuit (4) opens the said control interruptor (K0) at the end of a predetermined first time period as a function of predetermined parameters of the power supply apparatus, and closes the said controlled interruptor (K0) at the end of a second predetermined time period as a function of predetermined parameters of the power supply apparatus.

9.  A vehicle headlamp equipped with a power supply apparatus for discharge lamps in accordance with one of the preceding claims.

FIG.1

FIG.2

FIG. 4

FIG.3

FIG.5

FIG.6

EP 0 567 408 B1

Phases à LAD éteinte

KO fermé | KO ouvert, D123 bloquée | KO ouvert D123 passante
D123 bloquée im 0 Vco(0)=0 | im(0)>0 vco(0)>0
im<0

KO ouvert D123 bloquée im(0)=0 vco(0)>0

FIG.7a

FIG.7b

FIG.7c

Tensions (Volts)
Courants (Amperes)

VC1

VCO

t (phases)

im

FIG.7d

12

FIG.8

FIG.9

FIG.10

FIG.11

FIG.12

FIG.14

FIG.13

FIG.15a

FIG.15b